# EUROPEAN PATENT SPECIFICATION

(11) **EP 0 544 375 B1**
(45) Date of publication and mention of the grant of the patent: **28.08.1996**
(21) Application number: 92203619.9
(22) Date of filing: 23.11.1992
(51) Int. Cl.: C08L 73/00, C08L 25/00, C08G 67/02

(54) **A composition comprising a polymer of carbon monoxide and ethylenically unsaturated compounds**
Mischung, die ein Polymer aus Kohlenmonoxid und ethylenisch ungesättigten Verbindungen enthält
Composition contenant un polymère de monoxyde de carbone et de composés éthyléniquement insaturés

(30) Priority: 25.11.1991 US 796957
(43) Date of publication of application: 02.06.1993
(73) Proprietor: SHELL INTERNATIONALE RESEARCH MAATSCHAPPIJ B.V., NL-2596 HR Den Haag (NL)
(72) Inventor: Machado, Joseph Michael, Destrehan, Louisiana 70047 (US); French, Raymond Nicholas, Missouri City, Texas 77459 (US)

(56) References cited:
- EP-A- 0 348 206

## Description

This invention relates to a composition comprising a blend of a linear alternating polymer of carbon monoxide with ethylenically unsaturated compound(s).

The class of polymers of carbon monoxide with olefins has been known for some time. More recently, the class of linear alternating polymers of carbon monoxide with at least one ethylenically unsaturated compound, now becoming known as polyketones or polyketone polymers, has become of greater interest. For example US-A-4,880,903 disclosed a linear alternating polyketone terpolymer of carbon monoxide, ethylene and other olefinically unsaturated hydrocarbons, such as propylene.

The polyketone polymers possess an attractive set of properties for a variety of applications. The utility of these polymers can be further broadened by selectively blending the polyketone polymers with other materials which have complementary property sets. Most often this is accomplished with polymer blends which are immiscible (heterogeneous) on the molecular scale, yet well dispersed (compatible) on the macroscopic scale.

Immiscible, though compatible, blends are the most common polymer mixtures. However, on rare occasions, polymer pairs will form miscible blends. The terms "miscible" and "molecularly miscible" will be used hereinafter to describe a mixture of two or more polymers that form a single-phase solution (solid or liquid) on a molecular scale within the amorphous phase. When one or both of the polymer blend components is capable of forming both a crystalline and an amorphous phase, then the term "miscible" refers only to the amorphous phase in which the separate components are capable of mixing on the molecular level. Molecularly miscible blends are defined as being blends that can be mixed such that they exhibit only one glass transition temperature, indicating a single amorphous phase. More specifically, molecularly miscible blends exhibit one glass transition temperature as measured by thermal analysis, using a differential scanning calorimeter, or by dynamic mechanical analysis. It will be appreciated that by the miscibility of polymers a tool can be obtained which enables shifting the glass transition temperatures of the polymers from less favourable to favourable values.

It is known from US-A-4,812,522 that polyketone polymers and poly(vinylphenol) form such miscible blends. However, due to the presence of the poly(vinylphenol), containing a large quantity of (polar) hydroxyl groups, the water barrier properties of the blends, i.e. the ability of the blends to reduce the rate of water transport when used as a water barrier material, may become undesirably low. It is therefore the object of the present invention to provide a miscible polyketone polymer blend with a reduced content of hydroxyl groups.

It has now been found that the desired molecularly miscible blends with a reduced content of hydroxyl groups can be prepared by blending the polyketone with a copolymer of styrene and vinylphenol which has a low content of vinylphenol.

The present invention therefore relates to a composition comprising a blend of a linear alternating polymer of carbon monoxide with at least one ethylenically unsaturated compound and a copolymer derived from a styrene monomer and a vinylphenol monomer, wherein the copolymer contains at least 20 mol% and up to 50 mol% monomer units derived from vinylphenol, based on total moles of monomer units.

This finding is highly unexpected in view of US-A-4,812,522, which teaches that, in order to obtain a miscible blend of a polyketone with a copolymer of vinylphenol, the content of the vinylphenol monomer units in the vinylphenol copolymer should be more than 50 mol%. On the other hand, as disclosed in US-A-4956412, polyketones form immiscible blends with styrene/acrylonitrile copolymers having an acrylonitrile content of 20 - 35 wt%, or, in other words, with styrene copolymers having a high styrene content. It should be borne in mind that polymer miscibility applies only to very specific polymer pairs and that subtle changes in the structure of either polymer can easily lead to immiscibility, the results of any change being unpredictable.

The polyketone polymers of the blends of the invention are of a linear alternating structure and contain substantially one molecule of carbon monoxide for each molecule of ethylenically unsaturated compound. The ethylenically unsaturated compound is preferably a hydrocarbon. Suitable ethylenically unsaturated hydrocarbons for use as precursors of the polyketone polymers have up to 20 carbon atoms inclusive, preferably up to 10 carbon atoms, and are aliphatic such as ethylene and other α-olefins including propylene, 1-butene, isobutylene, 1-hexene, 1-octene and 1-dodecene, or are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. The preferred polyketone polymers are copolymers of carbon monoxide and ethylene or terpolymers of carbon monoxide, ethylene and a second ethylenically unsaturated hydrocarbon of at least 3 carbon atoms, particularly an α-olefin such as propylene.

When the preferred polyketone terpolymers are employed as a component of the blends of the invention, there will be within the terpolymer at least 2 units incorporating a moiety of ethylene for each unit incorporating a moiety of the second hydrocarbon. Preferably, there will be from 10 units to 100 units incorporating a moiety of ethylene for each unit incorporating a moiety of the second hydrocarbon. The polymer chain of the preferred polyketone terpolymers is therefore represented by the repeating formula 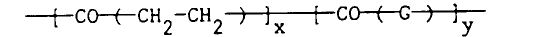 wherein G is the moiety of ethylenically unsaturated hydrocarbon of at least 3 carbon atoms polymerized through the ethylenic unsaturation and the ratio of y:x is from 0 to 0.5.

The -CO(̵CH₂CH₂)̵ units and the -CO(̵G)̵ units are distributed randomly throughout the polymer chain, and preferred ratios of y:x are from 0.01 to 0.1. It will be appreciated that when copolymers of carbon monoxide and ethylene are employed in the blends of the invention, there will be no second hydrocarbon present and the copolymers are represented by the above formula wherein y is zero. The end groups of the polymer chain will depend upon the materials present during the production of the polymer and whether or how the polymer was purified. The precise nature of the end groups does not appear to influence the properties of the polymer to any considerable extent so that the preference polyketone polymers are fairly represented by the formula for the polymer chain as depicted above.

Of particular interest are the polyketone polymers which have a melting point of from 175 °C to 300 °C, more typically from 210 °C to 270 °C. The polymers have eligibly a limiting viscosity number (LVN), measured in m-cresol at 60 °C in a standard capillary viscosity measuring device, from 0.5 dl/g to 10 dl/g, preferably from 0.8 dl/g to 4 dl/g.

A preferred method for the production of the polyketone polymers is disclosed in US-A-4,843,144. Carbon monoxide and hydrocarbon monomer(s) are contacted under polymerization conditions in the presence of a catalyst composition formed from a compound of palladium, the anion of a non-hydrohalogenic acid having a pKa (measured in water at 18 °C) of below about 6, preferably below 2, and a bidentate ligand of phosphorus. A preferred palladium compound is a palladium carboxylate, particularly palladium acetate, a preferred anion is the anion of trifluoroacetic acid or p-toluenesulfonic acid and a preferred bidentate ligand of phosphorus is 1,3-bis(diphenylphosphino)propane or 1,3-bis[bis-(2 -methoxyphenyl )phosphino] propane.

The polymerization to produce the polyketone polymer is typically conducted in an inert reaction diluent, preferably an alkanolic diluent, and methanol is particularly preferred. Typical polymerisation conditions include a reaction temperature from 20 °C to 150 °C, preferably from 50 °C to 135 °C. The reaction pressure is suitably from 1 atmosphere to 200 atmospheres and pressures from 10 atmospheres to 100 atmospheres are preferred. The polyketone polymer is typically obtained as a product substantially insoluble in the reaction diluent and the product is recovered by conventional methods such as filtration or decantation. The polyketone polymer is suitably used as recovered or the polymer may be purified by contact with a solvent or extraction agent which is selective for catalyst residues.

The second component of the blends of the invention is a copolymer of units derived from a styrene monomer, with or without substitution, and units derived from a vinylphenol monomer, with or without substitution.

Suitable styrene monomer units of the copolymer are represented by the following general formula: 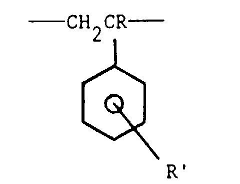 wherein R and R' independently are hydrogen or alkyl of up to 2 carbon atoms inclusive. Illustrative styrene compounds are styrene, α-methylstyrene, α-ethylstyrene, o-methylstyrene, and p-ethylstyrene, and mixtures thereof. Styrene and α-methylstyrene are preferred, and styrene is particularly preferred.

Suitable vinylphenol monomer units of the copolymer are represented by the following general formula: 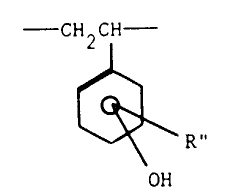 wherein R'' is hydrogen or alkyl of up to 2 carbon atoms inclusive. The vinylphenol monomers may thus be ortho-, meta- or para-vinylphenols, and mixtures thereof, and may be non-substituted or include additional alkyl groups of up to 2 carbon atoms inclusive on the aromatic ring. The preferred vinyl phenol monomers are non-substituted, particularly with the hydroxyl radical in the para position.

Vinylphenol polymers can be prepared by methods known in the art. A high purity para-vinylphenol polymer may be produced by polymerizing para-vinylphenol in the presence of phenols without unsaturated side chains, and in the presence of a polymerization accelerator, such as a free radical initiator. A preferred method is by copolymerizing styrene monomer and para-acetoxystyrene monomer, followed by hydrolysis to convert the para-acetoxystyrene repeat units into para-vinylphenol repeat units.

The amount of vinylphenol monomer units present in the copolymer is at least 20 mol% and up to 50 mol% and preferably more than 25 mol% and less than 40 mol%, based on total moles of monomer units. The styrene and vinylphenol monomer units are distributed approximately randomly within the copolymer. The degree of randomness which is preferred for the purposes of this invention is that which is sufficient to prevent micro-phase separation within the copolymer itself. Polymerization with a free radical initiator yields a copolymer whose monomer unit sequence distribution is essentially random.

Miscibility of the polyketone polymer and the styrene/vinylphenol copolymer is expected across the entire spectrum of blends, in particular when the blends are formed from 1-99 wt% of the polyketone polymer and 99-1 wt% of the styrene/vinylphenol copolymer, based on the weight of the blend. Preferred compositions according to the invention contain the polyketone polymer as a major component. A preferred blend contains from 5 wt% to 35 wt% of the styrene/vinylphenol copolymer, based on the weight of the blend. Particularly preferred are blends containing from 5 wt% to 25 wt% of the styrene/vinylphenol copolymer, based on the weight of the blend.

The blends of the invention may also include additives such as antioxidants and stabilizers, dyes, fillers or reinforcing agents, fire resistant materials, mould release agents, colorants and other materials designed to improve the processability of the polymers to be blended or the properties of the resulting blend. Such additives may be added prior to, together with or subsequent to the blending of the polyketone and the copolymer.

The method of producing the blends of the invention is not material. Preferably the blends are produced without undue degradation of the blend or its components. In one modification the polymer components of the blend are extruded in a corotating twin screw extruder to produce the blend. In another modification, the polymer components are blended in a mixing device which exhibits high shear. The blends are processed by methods such as extrusion and injection moulding into sheets, films, plates and shaped articles. An illustrative application is in particular the production of articles useful in both rigid and flexible packaging. The blends can also be used for the production of both internal and external parts for the automotive industry and structural parts for the construction industry.

The invention is further illustrated by the following Examples which should not be regarded as limiting.

### Example 1

A linear alternating terpolymer of carbon monoxide, ethylene, and propylene was produced in the presence of a catalyst composition formed from palladium acetate, trifluoroacetic acid and 1,3-bis[bis(2-methoxyphenyl)phosphino]propane. The polyketone polymer had a melting point of 220 °C and an LVN of 1.8 dl/g when measured in m-cresol at 60 °C. Conventional additives were added to the polyketone polymer.

### Example 2

Blends were prepared of the polyketone terpolymer of Example 1 and a styrene/vinylphenol (SVP) copolymer containing 35 mol% unsubstituted vinylphenol monomer units and 65 mol% unsubstituted styrene monomer units. The SVP was a random copolymer, prepared by free radical polymerization, with a weight-average molecular weight of 56,000. The blends and neat polymer control samples were prepared by melt compounding on a co-rotating twin screw extruder operating at 300 RPM and a melt temperature of 250 °C. The blends prepared are listed in Table 1. Test specimens of the blends were compression moulded at 240 °C and stored over dessicant prior to testing.

The specimens were subjected to thermal analysis using a differential scanning calorimeter (DSC). The samples were scanned from -100 °C to 250 °C at a rate of 20 °C/min. They were then quenched to -100 °C and rescanned to 250 °C at 20 °C/min. The glass transition temperature for each sample was determined upon the second heating. The glass transition temperatures for the blends, as determined by DSC, are reported in Table 1.

The specimens were also subjected to dynamic mechanical testing (DMT). The glass transition temperature of the blends was determined by the temperature at which the dynamic mechanical loss tangent, tan delta, reached a maximum value in mechanical torsion at 1 Hz frequency and low strain amplitude. The pure SVP sample was too brittle for DMT analysis. The glass transition temperatures, as determined by DMT, are also reported in Table 1.

**Table 1**

| Composition (Polyketone/SVP) | Glass Transition Temperature (°C) | |
|---|---|---|
| | DMT | DSC |
| 100/0 | 16 | 12.7 |
| 90/10 | -- | 31.1 |
| 80/20 | 66 | 40.8 |
| 70/30 | 70 | 39.7 |
| 0/100 | -- | 124.7 |

The miscibility of SVP with polyketone was demonstrated by the glass transition temperatures for the blends. The blends tested each exhibited a single glass transition, the temperature of which increases from the glass transition temperature of polyketone to the glass transition temperature of SVP, based on the relative proportions of the blend components.

The glass transition temperatures determined by dynamic mechanical methods are always somewhat higher than those determined by calorimetric methods, because of differences in the characteristic rate of the test. However, the glass transitions from both methods follow the same trend.

The single glass transition is evidence of a single amorphous phase consisting of the SVP copolymer (which is entirely amorphous) and the amorphous fraction of polyketone. The crystalline phase of the blend consists entirely of polyketone segments.

The miscibility observed for this pair of polymers implies that high quality blends can be prepared having properties which are intermediate between those of a tough polyketone and a stiff styrenic copolymer.

## Claims

1. A composition comprising a blend of a linear alternating polymer of carbon monoxide with at least one ethylenically unsaturated compound and a copolymer derived from a styrene monomer and a vinylphenol monomer, wherein the copolymer contains at least 20 mol% and up to 50 mol% monomer units derived from vinylphenol, based on total moles of monomer units.

2. A composition as claimed in claim 1 wherein the styrene monomer is unsubstituted styrene.

3. A composition as claimed in claim 1 or 2 wherein the vinylphenol monomer is unsubstituted vinylphenol, in particular p-vinyl-phenol.

4. A composition as claimed in any of claims 1-3 wherein the copolymer contains more than 25 mol% and less than 40 mol% monomer units derived from vinylphenol, based on total moles of monomer units.

5. A composition as claimed in any of claims 1-4, wherein the blend contains from 5 to 35 weight percent of the copolymer, based on the weight of the blend.

6. A composition as claimed in claim 5 wherein the blend contains from 5 to 25 weight percent of the copolymer, based on the weight of the blend.

7. A composition as claimed in any of claims 1-6 wherein the linear alternating polymer is represented by the repeating formula 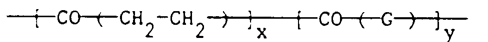 wherein G is a moiety of an ethylenically unsaturated hydrocarbon of at least 3 carbon atoms polymerized through the ethylenic unsaturation and the ratio of y:x is from 0 to 0.5.

8. A composition as claimed in claim 7 wherein, in the linear alternating polymer, G is a moiety of propylene and the ratio of y:x is from 0.01 to 0.1.

9. A composition as claimed in claim 7 wherein, in the linear alternating polymer, y is zero.

10. A composition as claimed in any of claims 1-9, wherein the linear alternating polymer has a melting point from 210 °C to 270 °C and a limiting viscosity number, measured in m-cresol at 60 °C, from 0.8 dl/g to 4 dl/g.

## Patentansprüche

1. Zusammensetzung, enthaltend einen Blend aus einem linearen alternierenden Polymer aus Kohlenmonoxid und mindestens einer ethylenisch ungesättigten Verbindung und einem von einem Styrolmonomer und einem Vinylphenolmonomer abgeleiteten Copolymer, welches, bezogen auf die Gesamtmolzahl der Monomereinheiten, mindestens 20 Mol-% und bis zu 50 Mol-% von Vinylphenol abgeleitete Monomereinheiten enthält.

2. Zusammensetzung nach Anspruch 1, wobei es sich bei dem Styrolmonomer um unsubstituiertes Styrol handelt.

3. Zusammensetzung nach Anspruch 1 oder 2, wobei es sich bei dem Vinylphenolmonomer um unsubstituiertes Vinylphenol, insbesondere p-Vinylphenol, handelt.

4. Zusammensetzung nach einem der Ansprüche 1-3, wobei das Copolymer, bezogen auf die Gesamtmolzahl der Monomereinheiten, über 25 Mol-% und unter 40 Mol-% von Vinylphenol abgeleitete Monomereinheiten enthält.

5. Zusammensetzung nach einem der Ansprüche 1-4, wobei der Blend, bezogen auf das Gewicht des Blends, 5 bis 35 Gewichtsprozent des Copolymers enthält.

6. Zusammensetzung nach Anspruch 5, wobei der Blend, bezogen auf das Gewicht des Blends, 5 bis 25 Gewichtsprozent des Copolymers enthält.

7. Zusammensetzung nach einem der Ansprüche 1-6, wobei das lineare alternierende Polymer durch die wiederkehrende Formeleinheit 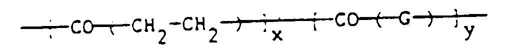 worin G eine über die ethylenische Ungesättigtheit polymerisierte Baugruppe eines ethylenisch ungesättigten Kohlenwasserstoffs mit mindestens 3 Kohlenstoffatomen darstellt und das Verhältnis y:x 0 bis 0,5 beträgt, dargestellt wird.

8. Zusammensetzung nach Anspruch 7, wobei in dem linearen alternierenden Polymer G eine Propylenbaugruppe darstellt und das Verhältnis y:x 0,01 bis 0,1 beträgt.

9. Zusammensetzung nach Anspruch 7, wobei in dem linearen alternierenden Polymer y null ist.

10. Zusammensetzung nach einem der Ansprüche 1-9, wobei das lineare alternierende Polymer einen Schmelzpunkt von 210°C bis 270°C und eine Grenzviskositätszahl, gemessen in m-Kresol bei 60°C, von 0,8 dl/g bis 4 dl/g aufweist.

## Revendications

1. Composition comprenant un mélange d'un polymère linéaire alterné de monoxyde de carbone avec au moins un composé à insaturation éthylénique et d'un copolymère dérivé d'un monomère styrène et d'un monomère vinylphénol, dans laquelle le copolymère contient au moins 20% en moles et jusqu'à 50% en moles de motifs de monomère dérivé du vinylphénol, par rapport au nombre total de moles de motifs de monomère.

2. Composition selon la revendication 1, dans laquelle le monomère de styrène est du styrène non substitué.

3. Composition selon la revendication 1 ou 2, dans laquelle le monomère vinylphénol est un vinylphénol non substitué, en particulier le p-vinylphénol.

4. Composition selon l'une quelconque des revendications 1 à 3, dans laquelle le copolymère contient plus de 25% en moles et moins de 40% en moles de motifs de monomère dérivé du vinylphénol, par rapport au nombre total de moles de motifs de monomère.

5. Composition selon l'une quelconque des revendications 1 à 4, dans laquelle le mélange contient de 5 à 35% en poids du copolymère, par rapport au poids du mélange.

6. Composition selon la revendication 5, dans laquelle le mélange contient de 5 à 25% en poids de copolymère, par rapport au poids du mélange.

7. Composition selon l'une quelconque des revendications 1 à 6, dans laquelle le polymère linéaire alterné est représenté par la formule récurrente 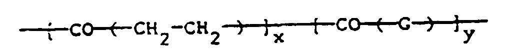 dans laquelle G est un groupement d'un hydrocarbure à insaturation éthylénique d'au moins 3 atomes de carbone polymérisé au niveau de l'insaturation éthylénique et le rapport y:x est de 0 à 0,5.

8. Composition selon la revendication 7, dans laquelle, dans le polymère linéaire alterné, G est un groupement propylène et le rapport y:x est de 0,01 à 0,1.

9. Composition selon la revendication 7, dans laquelle, dans le polymère linéaire alterné, y est nul.

10. Composition selon l'une quelconque des revendications 1 à 9, dans laquelle le polymère linéaire alterné possède un point de fusion de 210°C à 270°C et un indice de viscosité limite (LVN), mesuré dans le m-crésol à 60°C, de 0,8 dL/g à 4 dL/g.
